# EUROPEAN PATENT APPLICATION

(11) **EP 4 675 694 A1**
(43) Date of publication of application: **07.01.2026**
(21) Application number: 24813743.2
(22) Date of filing: 05.02.2024
(51) Int. Cl.: H01M 4/13, H01M 4/36, H01M 4/62, H01M 10/42, H01M 10/052

(54) **ELECTRODE SHEET, BATTERY CELL, BATTERY, AND ELECTRIC DEVICE**

(30) Priority: 02.06.2023 CN 202310651153
(71) Applicant: Contemporary Amperex Technology Co., Limited, Ningde, Fujian 352100 (CN)
(72) Inventor: LANG, Yaqiang, Ningde, Fujian 352100 (CN); HE, Jianfu, Ningde, Fujian 352100 (CN); YE, Yonghuang, Ningde, Fujian 352100 (CN); SHI, Haihong, Ningde, Fujian 352100 (CN)
(74) Representative: Kraus & Lederer PartGmbB
(86) International application number: PCT/CN2024/075991
(87) International publication number: WO 2024/244537

(57) **Abstract**

The present application relates to an electrode sheet, a battery cell, a battery, and an electric device. The electrode sheet includes a current collector, a coating, and an active material layer. The coating is provided on at least one surface of the current collector and includes at least one coating area. The coating area includes a decomposable material. The decomposable material is configured to decompose under at least one condition of charging and discharging of the battery cell. The decomposable material includes at least one of a lithium supplementing material and a pore forming material. The lithium supplementing material includes a lithium ion-containing compound. The active material layer is provided on at least one surface of the current collector and covers the coating.

## Description

### CROSS-REFERENCE TO RELATED APPLICATIONS

The present application claims priority to Chinese Patent Application No. 202310651153.1, filed on June 02, 2023 and entitled "Electrode Sheet, Battery Cell, Battery, and Electric Device", which is incorporated herein by reference in its entirety.

### TECHNICAL FIELD

The present application relates to an electrode sheet, a battery cell, a battery, and an electric device.

### BACKGROUND

Battery cells are advantageous in reliable operating performance, no pollution, no memory effect, and the like, and therefore are widely used. For example, with growing awareness of environmental protection and the increasing prevalence of new energy vehicles, there is an anticipated explosive growth in demand for power battery cells.

With the improvement of the performance requirements of the battery cells, the use reliability of the battery cells is particularly important, and therefore, how to further improve the cycle performance of the battery cells is an urgent problem to be solved nowadays.

### SUMMARY

The present application provides an electrode sheet, a battery cell, a battery, and an electric device, and can improve the cycle performance of the battery cell.

In a first aspect, an implementation of the present application provides an electrode sheet of a battery cell. The electrode sheet includes a current collector, a coating, and an active material layer. The coating is provided on at least one surface of the current collector and includes at least one coating area. The coating area includes a decomposable material. The decomposable material is configured to decompose under at least one condition of charging and discharging of the battery cell. The decomposable material includes at least one of a lithium supplementing material and a pore forming material. The lithium supplementing material includes a lithium ion-containing compound. The active material layer is provided on at least one surface of the current collector and covers the coating.

According to the implementation of the present application, during the cyclic charging and discharging process of the battery cell, the decomposable material is decomposed, the decomposable material gradually decreases, the active material layer corresponding to the position is recessed in the direction toward the current collector, and the surface of the active material layer facing away from the current collector forms a slight recessed area, so that an expansion space is reserved in the thickness direction of the electrode sheet to slow down the expansion force of the electrode assembly; the existence of the expansion space is beneficial to improving the suck-back rate of the electrolyte solution, improve the wettability of the electrolyte solution to the electrode assembly, and reduce the risk of metal dendrites generated by the local precipitation of a metal from the electrode sheet; and the expansion space can also store the electrolyte solution and improve the liquid retention capacity of the electrode sheet, thereby improving the cycle performance of the battery cell.

The decomposable material includes at least one of a lithium supplementing material and a pore forming material. The lithium supplementing material can decompose and release lithium ions during the charging and discharging process (for example, a first charging process) of the battery cell, thereby realizing the lithium supplementation of a battery system, increasing the content of the lithium ions in the battery system, and improving the capacity of the battery cell. The pore forming material can decompose and release a gas during the charging and discharging process of the battery cell, and the gas may cause a pore structure in the active material layer when flowing through the active material layer, thereby increasing the porosity of the active material layer, improving the liquid absorption capacity and liquid retention capacity of the active material layer, and further improving the cycle performance of the battery cell.

In some implementations, the lithium supplementing material includes one or more of lithium nitride, lithium oxide, lithium peroxide, lithium squarate, and lithium-rich lithium ferrate Li₅FeO₄.

In some implementations, the pore forming material includes one or more of a carbonate, an oxalate and a metal oxide.

In some implementations, the carbonate includes one or more of ammonium carbonate, ammonium bicarbonate, and sodium bicarbonate.

In some implementations, the oxalate includes one or more of ammonium oxalate, sodium oxalate, and ammonium hydrogen oxalate.

In some implementations, the metal oxide includes one or more of zinc oxide, magnesium oxide, and aluminum oxide.

In some implementations, a ratio of a coating gram weight of the active material layer to a coating gram weight of the coating is 5.2 to 150, optionally 6.5 to 100. When the ratio of the coating gram weight of the active material layer to the coating gram weight of the coating is within the above range, the decomposition of the decomposable material during the cyclic charging and discharging process of the battery cell can leave a sufficient expansion space for the active material layer, thereby improving the cycle performance of the battery cell.

In some implementations, a coating gram weight C1 of the active material layer satisfies 65g/m²≤C1≤300g/m².

In some implementations, a coating gram weight C2 of the coating satisfies 2g/m²≤C2≤20g/m², optionally, 5g/m²≤C2≤20g/m².

In some implementations, a ratio of a thickness of the coating to a thickness of the active material layer is 0.008 to 0.200, optionally, 0.015 to 0.154. When the ratio of the thickness of the coating to the thickness of the active material layer is within the above range, the degree of collapse after the decomposable material in the coating is decomposed is not too deep, so that the recessed area on the surface of the active material layer is not too deep, the risk that cracks and the like may be generated in the active material layer is reduced, and it is beneficial to exerting the electrical performance of the active material; moreover, the degree of collapse is not too shallow, so that the recessed area on the surface of the active material layer is not too shallow, thereby providing a sufficient pre-expansion space for the electrode sheet and improving the liquid retention capacity of the electrode sheet.

In some implementations, a thickness of the coating is 1 µm to 20 µm, optionally 5 µm to 20 µm.

In some implementations, a thickness of the active material layer is 80 µm to 300 µm.

In some implementations, a ratio of a width of the coating area to a width of the current collector is Y, where 0.05≤Y≤0.50, optionally, 0.10≤Y≤0.50. When the ratio of the width of the coating area to the width of the active material layer is within the above range, the recessed area is not too large after the decomposable material in the coating is decomposed, so that the recessed area on the surface of the active material layer is not too large, and it is beneficial to exerting the electrical performance of the active material; moreover, the recessed area is not too small, so that the recessed area on the surface of the active material layer is not too small, thereby providing a sufficient pre-expansion space for the electrode sheet and improving the liquid retention capacity of the electrode sheet.

In some implementations, an expansion rate of the electrode sheet is Z, and the ratio of the width of the coating area to the width of the current collector is Y, and the electrode sheet satisfies at least one of the following conditions:
(1) Z<20%; 0.10≤Y≤0.50, optionally 0.10≤Y≤0.15;
(2) 20%≤Z<25%; 0.13≤Y≤0.50, optionally 0.13≤Y≤0.20;
(3) 25%≤Z<30%; 0.15≤Y≤0.50, optionally 0.15≤Y≤0.30; and
(4) 30%≤ Z; 0.30≤Y≤0.50, optionally 0.33≤Y≤0.50.

According to the implementation of the present application, in the case where the expansion rate of the electrode sheet is relatively great, the size of the coating is increased, thereby providing a relatively larger recessed area on the surface of the active material layer and reducing the expansion force of the electrode assembly; and in the case where the expansion rate of the electrode sheet is relatively less, the size of the coating is decreased, thereby, in the case where the surface of the active material layer has the relatively small recessed area, similarly playing a role of reducing the expansion force of the electrode assembly well.

In some implementations, the coating includes a plurality of coating areas, and the plurality of coating areas are spaced apart on the surface of the current collector and located between the current collector and the active material layer. The plurality of coating areas can provide a plurality of recessed areas for the active material layer by decomposing the decomposable material, thereby further reducing the expansion force of the electrode assembly and improving the liquid retention capacity of the electrode sheet.

In some implementations, the coating is provided on both surfaces of the current collector opposite to each other. Coatings are provided on two surfaces. The plurality of recessed areas can be provided for the active material layer by decomposing the decomposable material, thereby further reducing the expansion force of the electrode assembly and improving the liquid retention capacity of the electrode sheet.

In a second aspect, an implementation of the present application provides a battery cell, including the electrode assembly according to any one implementation in the first aspect of the present application.

In some implementations, the electrode sheet includes a positive electrode sheet.

In some implementations, the electrode sheet includes a negative electrode sheet.

In a third aspect, an implementation of the present application provides a battery, including the battery cell in the second aspect of the present application.

In a fourth aspect, an implementation of the present application provides an electric device, including the battery according to any one implementation in the third aspect of the present application.

### DESCRIPTION OF DRAWINGS

To describe the technical solutions in embodiments of the present application more clearly, the following briefly describes the accompanying drawings needed for the embodiments of the present application. Clearly, the accompanying drawings described below are merely some embodiments of the present application. Those of ordinary skill in the art can still derive other accompanying drawings from these accompanying drawings without creative efforts.
FIG. 1 is a schematic structural diagram of an implementation of an electrode sheet according to the present application.
FIG. 2 is a schematic structural diagram of the electrode sheet shown in FIG. 1 from another perspective.
FIG. 3 is a sectional schematic diagram of the electrode sheet shown in FIG. 2 taken along a line A-A.
FIG. 4 is a schematic structural diagram of another implementation of an electrode sheet according to the present application.
FIG. 5 is a schematic structural diagram of the electrode sheet shown in FIG. 4 from another perspective.
FIG. 6 is a sectional schematic diagram of the electrode sheet shown in FIG. 5 taken along a line B-B.
FIG. 7 is another sectional schematic diagram of the electrode sheet shown in FIG. 5 taken along a line B-B.
FIG. 8 is yet another sectional schematic diagram of the electrode sheet shown in FIG. 5 taken along a line B-B.
FIG. 9 is a schematic structural diagram of an implementation of a battery cell according to the present application.
FIG. 10 is a schematic exploded view of the implementation of the battery cell in FIG. 9.
FIG. 11 is a schematic structural diagram of an embodiment of a battery module according to the present application.
FIG. 12 is a schematic structural diagram of an embodiment of a battery pack according to the present application.
FIG. 13 is a schematic exploded view of the embodiment of the battery pack shown in FIG. 12.
FIG. 14 is a schematic structure diagram of an implementation of an electric device including a battery cell of the present application as a power source.

The accompanying drawings are not necessarily drawn to scale.

### Description of reference numerals:

1-battery pack; 2-upper box body; 3-lower box body; 4-battery module;
5-battery cell; 51-housing; 52-electrode assembly;
53-cover plate;
6-electric device;
7-electrode sheet;
71-current collector; 72-coating; 721-coating area; 73-active material layer.

### DESCRIPTION OF EMBODIMENTS

Implementations where an electrode sheet, a battery cell, a battery, and an electric device of the present application are specifically disclosed are described below in detail with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

It should be noted that, unless otherwise specified, the technical terms or scientific terms used in the implementations of the present application shall have the ordinary meanings as understood by a person of ordinary skill in the art to which the implementations of the present application pertain.

In the description of the implementations of the present application, orientational or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like are based on orientational or positional relationships shown in the drawings, and are merely for convenience of description of the implementations of the present application and simplified description, and do not indicate or imply that an indicated apparatus or element must have a specific orientation or be configured and operated in a specific orientation, and thus should not be construed as limitations on the implementations of the present application.

In addition, the technical terms "first", "second" and the like are only used for descriptive purposes, and should not be construed as indicating or implying relative importance or implicitly indicating the number of technical features indicated. In the description of the implementations of the present application, "a plurality of" means two or more unless specifically defined otherwise.

In the description of the implementations of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. Those of ordinary skill in the art may understand the specific meanings of the above terms in the implementations of the present application according to specific situations.

In the description of the implementations of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the present application, the battery cell may include a lithium-ion battery cell, a lithium-ion primary battery cell, a lithium-sulfur battery cell, a sodium-lithium ion battery cell, a sodium-ion battery cell, a magnesium-ion battery cell, or the like, which is not limited in the implementations of the present application. The battery cell may be in a shape of a cylinder, a flat body, a cuboid, or the like, which is not limited in the implementations of the present application. The battery cell is generally classified into three types according to a packaging manner, that is, a cylindrical battery cell, a cubic square battery cell, and a soft-pack battery cell, which is not limited in the implementations of the present application.

The battery cell includes an electrode assembly and an electrolyte solution. The electrode assembly includes a positive electrode sheet, a negative electrode sheet, and a separator. The electrolyte solution is dispersed in the electrode assembly, so that the electrode assembly is infiltrated by the electrolyte solution, and metal ions are movable between the positive electrode sheet and the negative electrode sheet through the electrolyte solution to work. During the cyclic charging and discharging process of the battery cell, the electrode assembly will undergo volume change (such as volume expansion), so that the electrolyte solution may be squeezed out of the electrode assembly, and the electrode assembly sucks the electrolyte solution back at a slow rate, so that the electrode assembly is partially liquid-deficient, which may cause local precipitation of a metal to generate metal dendrites, thereby deteriorating the cycle performance of the battery cell.

In view of the above problems, in the embodiment of the present application, the electrode sheet is improved and an electrode sheet is provided. The electrode sheet is provided with a coating on at least one surface of a current collector. The electrode sheet further includes an active material layer, provided on at least one surface of the current collector and covered by the coating. The coating includes a decomposable material, during the cyclic charging and discharging process of the battery cell, the decomposable material is decomposed, the decomposable material gradually decreases, the active material layer corresponding to the position is recessed in the direction toward the current collector, and the surface of the active material layer facing away from the current collector forms a slight recessed area, so that an expansion space is reserved in the thickness direction of the electrode sheet to slow down the expansion force of the electrode assembly; the existence of the expansion space is beneficial to improving the suck-back rate of the electrolyte solution, improve the wettability of the electrolyte solution to the electrode assembly, and reduce the risk of metal dendrites generated by the local precipitation of a metal from the electrode sheet; and the expansion space can also store the electrolyte solution and improve the liquid retention capacity of the electrode sheet, thereby improving the cycle performance of the battery cell.

### Electrode sheet

In a first aspect, an implementation of the present application provides an electrode sheet, which is applied to a battery cell.

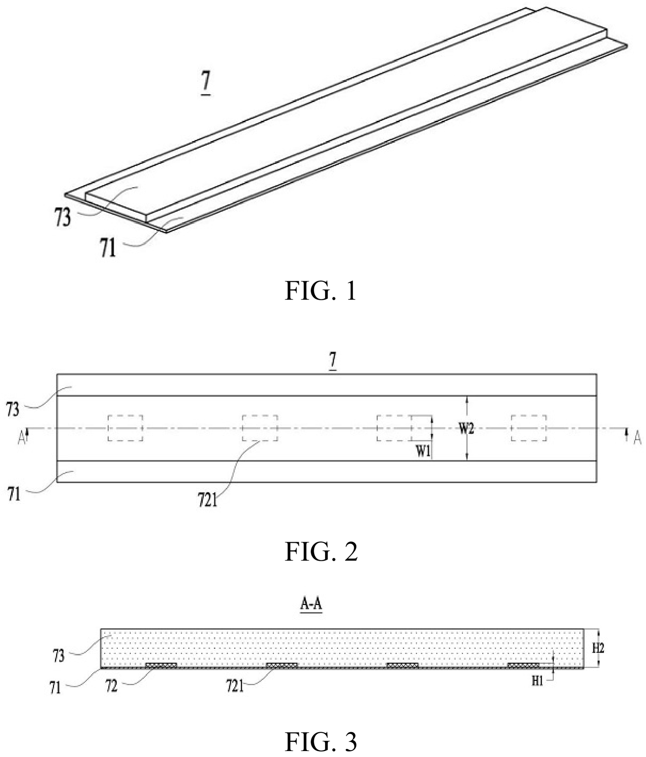

As shown in FIGS. 1-3, the electrode sheet 7 includes a current collector 71, a coating 72, and an active material layer 73, where the coating 72 is provided on at least one surface of the current collector 71 and includes at least one coating area 721. The coating area 721 includes a decomposable material. The decomposable material is configured to decompose under at least one condition of charging and discharging of the battery cell. The decomposable material includes at least one of a lithium supplementing material and a pore forming material. The lithium supplementing material includes a lithium ion-containing compound. The active material layer 73 is provided on at least one surface of the current collector 71 and covers the coating 72.

The active material layer 73 is provided on at least one surface of the current collector 71, and the coating 72 is located between the active material layer 73 and the current collector 71. During the cyclic charging and discharging process of the battery cell, the decomposable material is decomposed, the decomposable material gradually decreases, the active material layer 73 corresponding to the position is recessed in the direction toward the current collector 71, and the surface of the active material layer 73 facing away from the current collector 71 forms a slight recessed area, so that an expansion space is reserved in the thickness direction of the electrode sheet 7 to slow down the expansion force of the electrode assembly; the existence of the expansion space is beneficial to improving the suck-back rate of the electrolyte solution, improve the wettability of the electrolyte solution to the electrode assembly, and reduce the risk of metal dendrites generated by the local precipitation of a metal from the electrode sheet 7; and the expansion space can also store the electrolyte solution and improve the liquid retention capacity of the electrode sheet 7, thereby improving the cycle performance of the battery cell.

The coating 72 includes at least one coating area 721, the coating area 721 includes a decomposable material, and the decomposable material is capable of being decomposed in at least one of charging and discharging conditions of the battery cell. It may be understood as follows: the decomposable material is capable of being decomposed during the cycling process of the battery cell, for example, the battery cell generates heat during the cycling process to cause rise of the temperature in the battery cell, and when the temperature is relatively high (reaching a preset temperature, for example, 110°C), the decomposable material may be decomposed. For another example, after the electrolyte solution is injected into the battery cell, the electrolyte solution diffuses into the electrode sheet 7 and is in contact with the decomposable material, and the decomposable material is dissolved in the electrolyte solution and may chemically react, causing the decomposable material to decompose. For yet another example, during the cycling process of the battery cell, the battery cell has a certain operating voltage, and the decomposable material is decomposed at the operating voltage. Based on this, it may be considered that the decomposable material is decomposed when a preset condition is satisfied, and the preset condition may be the preset temperature mentioned above, or the decomposable material is dissolved in the electrolyte solution, or under an operating voltage system. FIGS. 2 and 3 show that the coating 72 includes four coating areas 721, although the number of coating areas 721 may be relatively less or greater.

In some implementations, the decomposable material includes a lithium supplementing material, and the lithium supplementing material includes a lithium ion-containing compound. Since the battery cell can forming a solid electrolyte interphase (SEI) film during the formation process, and the formation of the SEI film is a process of consuming active lithium ions, causing reduction of the capacity of the battery cell. The lithium supplementing material can decompose and release lithium ions during the charging and discharging process (for example, a first charging process) of the battery cell, thereby realizing the lithium supplementation of a battery system, increasing the content of the lithium ions in the battery system, and improving the capacity of the battery cell. With the decomposition of the lithium supplementing material, the coating 72 gradually collapses, and the active material layer 73 corresponding to the coating 72 is recessed toward the direction of the current collector 71, and a local recessed area is formed on the surface of the active material layer 73. The active material layer 73 corresponding to the coating 72 may be understood as follows: in the thickness direction of the electrode sheet 7, the projection surface of the coating 72 overlaps with the projection surface of a part of the active material layer 73, and this part of the active material layer 73 is the active material layer 73 corresponding to the coating 72.

Exemplarily, the lithium supplementing material may include one or more of lithium nitride, lithium oxide, lithium peroxide, lithium squarate, and lithium-rich lithium ferrate Li₅FeO₄. The lithium supplementing material is configured to decompose at the operating voltage of the battery cell.

The lithium supplementing material can supplement lithium for the battery system during the cyclic charging and discharging process of the battery cell, and with the decomposition of the lithium supplementing material, the active material layer 73 is correspondingly recessed to leave an expansion space for the expansion of the electrode sheet 7, which is beneficial to improving the cycle performance of the battery cell.

In some implementations, the decomposable material includes a pore forming material. The pore forming material is configured to decompose and release a gas during the charging and discharging process of the battery cell, and the gas may cause a pore structure in the active material layer 73 when flowing through the active material layer 73, thereby increasing the porosity of the active material layer 73, improving the liquid absorption capacity and liquid retention capacity of the active material layer, and further improving the cycle performance of the battery cell. With the decomposition of the pore forming material, the coating 72 gradually collapses, and the active material layer 73 corresponding to the coating 72 is recessed toward the direction of the current collector 71, and a local recessed area is formed on the surface of the active material layer 73. The active material layer 73 corresponding to the coating 72 may be understood as follows: in the thickness direction of the electrode sheet 7, the projection surface of the coating 72 overlaps with the projection surface of a part of the active material layer 73, and this part of the active material layer 73 is the active material layer 73 corresponding to the coating 72.

Exemplarily, the pore forming material may include one or more of a carbonate, an oxalate and a metal oxide. The pore forming material can be decomposed during the cycle charging and discharging process of the battery cell, for example, the oxalate and metal oxide can be decomposed at the operating voltage of the battery cell, and the carbonate can be decomposed when the temperature of the battery cell reaches the preset temperature.

For example, the carbonate includes one or more of ammonium carbonate, ammonium bicarbonate, and sodium bicarbonate.

For example, the oxalate includes one or more of ammonium oxalate, sodium oxalate, and ammonium hydrogen oxalate.

For example, the metal oxide includes one or more of zinc oxide, magnesium oxide, and aluminum oxide.

In some implementations, the mass percentage content of the decomposable material is greater than or equal to 80% based on the total mass of the coating 72. When the mass percentage content of the decomposable material is within the above range, on the one hand, the decomposable material can provide a recessed area for the active material layer 73 during the decomposition process, and slow down the expansion force of the electrode assembly, and on the other hand, the decomposable material can improve the capacity, cycle performance, and the like of the battery cell.

Exemplarily, the mass percentage content of the decomposable material may be 80%, 81%, 82%, 83%, 84%, 85%, 86%, 88%, 90%, 92%, 94%, 95% or a range formed by any two of the above values.

In some implementations, the coating 72 may further include a binder. The binder can enhance the bonding strength between the coating 72 and the current collector 71, and the binder can enhance the bonding strength between the coating 72 and the active material layer 73.

In some implementations, the mass percentage content of the binder may be 1%-5% based on the total mass of the coating 72.

Exemplarily, the mass percentage content of the binder may be 1%, 1.5%, 2%, 2.5%, 3%, 3.5%, 4%, 4.5%, 5%, or a range formed by any two of the above values.

Exemplarily, the binder includes one or more of polyvinylidene fluoride, polymethyl acrylate, styrene-butadiene rubber, sodium carboxymethyl cellulose, lithium carboxymethyl cellulose, polyvinyl alcohol, and polyurethane.

In some implementations, the coating 72 may further include a conductive agent. The conductive agent can improve the conductivity of the coating 72, thereby improving the overall conductivity of the electrode sheet 7.

In some implementations, the mass percentage content of the conductive agent may be 1% to 5% based on the total mass of the coating 72.

Exemplarily, the mass percentage content of the conductive agent may be 1%, 1.5%, 2%, 2.5%, 3%, 3.5%, 4%, 4.5%, 5%, or a range formed by any two of the above values.

Exemplarily, the conductive agent includes one or more of activated carbon, carbon black, graphite, carbon nanotubes and carbon fibers.

In some implementations, a ratio of a thickness of the coating 72 to a thickness of the active material layer 73 is 0.008 to 0.200, optionally, 0.015 to 0.154. When the ratio of the thickness of the coating 72 to the thickness of the active material layer 73 is within the above range, the degree of collapse after the decomposable material in the coating 72 is decomposed is not too deep, so that the recessed area on the surface of the active material layer 73 is not too deep, the risk that cracks and the like may be generated in the active material layer 73 is reduced, and it is beneficial to exerting the electrical performance of the active material; moreover, the degree of collapse is not too shallow, so that the recessed area on the surface of the active material layer 73 is not too shallow, thereby providing a sufficient pre-expansion space for the electrode sheet and improving the liquid retention capacity of the electrode sheet 7. It should be noted that the thickness of the coating 72 may be an average thickness, for example, a plurality of portions of the coating 72 are measured, and an average value is calculated from measured values; in a case where the coating 72 includes the plurality of portions of the coating areas 721, the thickness of the coating 72 may be an average value of thicknesses of a plurality of coating areas 721; the thickness of the active material layer 73 may be an average thickness, for example, a plurality of portions of the active material layer 73 are measured, and an average value is calculated from measured values.

Exemplarily, the ratio of the thickness of the coating 72 to the thickness of the active material layer 73 may be 0.008, 0.009, 0.010, 0.012, 0.015, 0.018, 0.020, 0.022, 0.025, 0.028, 0.030, 0.032, 0.035, 0.038, 0.040, 0.042, 0.045, 0.048, 0.050, 0.052, 0.055, 0.058, 0.060, 0.062, 0.065, 0.068, 0.070, 0.075, 0.078, 0.080, 0.090, 0.100, 0.110, 0.120, 0.130, 0.140, 0.150, 0.154, 0.155, 0.160, 0.170, 0.180, 0.190, 0.200, or a range formed by any two of the above values.

As some examples, the thickness of the coating 72 may be 1 µm to 20 µm, optionally 5 µm to 20 µm, further optionally 5 µm to 10 µm. For example, the thickness of the coating 72 may be 1 µm, 2 µm, 3 µm, 4 µm, 5 µm, 6 µm, 7 µm, 8 µm, 9 µm, 10 µm, 12 µm, 13 µm, 14 µm, 15 µm, 16 µm, 17 µm, 18 µm, 19 µm, 20 µm, or a range formed by any two of the above values.

As some examples, the thickness of the active material layer 73 is 80 µm to 300 µm. For example, the thickness of the active material layer 73 may be 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, or a range formed by any two of the above values.

In the implementation of the present application, the thicknesses of the coating 72 and the active material layer 73 are meaning well-known in the art, and may be detected by using devices and methods well-known in the art, for example, the thickness of the coating 72 and the thickness of the active material layer 73 may be measured by scanning the cross section of the electrode sheet 7 with a scanning electron microscope SEM. H1 shown in FIG. 3 indicates the thickness of the coating 72, and H2 indicates the thickness of the active material layer 73.

In some implementations, a ratio of the width of the coating area 721 to the width of the current collector 71 is Y, where 0.05≤Y≤0.50. When the ratio of the width of the coating area 721 to the width of the active material layer 73 is within the above range, the recessed area is not too large after the decomposable material in the coating 72 is decomposed, so that the recessed area on the surface of the active material layer 73 is not too large, and it is beneficial to exerting the electrical performance of the active material; moreover, the recessed area is not too small, so that the recessed area on the surface of the active material layer 73 is not too small, thereby providing a sufficient pre-expansion space for the electrode sheet and improving the liquid retention capacity of the electrode sheet 7. In the implementation of the present application, for example, the length of the coating area 721 may be the same as the length of the active material layer 73, or the length of the coating area 721 may be less than the length of the active material layer 73. It should be noted that the width of the coating area 721 may be an average width, for example, an average value of measured values obtained by measuring a plurality of portions of the coating area 721; and the width of the active material layer 73 may also be an average width, for example, an average value of measured values obtained by measuring a plurality of portions of the active material layer 73.

Optionally, 0.10≤Y≤0.50; further optionally, 0.11≤Y≤0.33; and still further optionally, 0.11≤Y≤0.23. When Y is within the above range, the cycle performance of the battery cell can be further improved.

Exemplarily, the ratio Y of the width of the coating area 721 to the width of the current collector 71 may be 0.05, 0.06, 0.07, 0.08, 0.09, 0.10, 0.11, 0.12, 0.13, 0.14, 0.15, 0.16, 0.18, 0.20, 0.22, 0.25, 0.26, 0.28, 0.30, 0.33, 0.35, 0.38, 0.40, 0.42, 0.45, 0.46, 0.48, 0.50, or a range formed by any two of the above values.

In the implementation of the present application, the width direction of the current collector 71 is perpendicular to the thickness direction of the electrode sheet 7, and the width direction of the current collector 71 may also be considered as being parallel to a direction from a region (for example, corresponding to a tab area) of the current collector 71 that is not coated with an active material to a region (corresponding to the active material layer 73) of the current collector 71 that is coated with an active material.

In some implementations, the width of the coating area 721 may be 5 mm to 50 mm. Optionally, the width of the coating area is 16 mm to 35 mm. Exemplarily, the width of the coating area 721 may be 5 mm, 6 mm, 8 mm, 10 mm, 12 mm, 15 mm, 16 mm, 18 mm, 20 mm, 22 mm, 25 mm, 28 mm, 30 mm, 32 mm, 35 mm, 38 mm, 40 mm, 42 mm, 45 mm, 48 mm, 50 mm, or a range formed by any two of the above values.

In some implementations, the width of the active material layer 73 may be 60 mm to 300 mm.

Exemplarily, the width of the active material layer 73 may be 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, 155 mm, 160 mm, 165 mm, 170 mm, 175 mm, 180 mm, 185 mm, 190 mm, 195 mm, 200 mm, 205 mm, 210 mm, 215 mm, 220 mm, 225 mm, 230 mm, 235 mm, 240 mm, 245 mm, 250 mm, 255 mm, 260 mm, 265 mm, 270 mm, 275 mm, 280 mm, 285 mm, 290 mm, 295 mm, 300 mm, or a range formed by any two of the above values.

In the implementations of the present application, the widths of the coating area 721 and the active material layer 73 are meaning well-known in the art, and may be detected by using devices and methods well-known in the art, for example, the widths of the coating area 721 and the active material layer 73 may be measured by scanning the cross section of the electrode sheet 7 with a scanning electron microscope SEM. W1 shown in FIG. 2 indicates the width value of the coating area 721, and W2 indicates the width value of the active material layer 73.

The electrode sheet 7 includes an active material layer 73 containing an active material, and different types or contents of active materials have different expansion degrees during the charging and discharging process of the battery cell; in order to better adapt to the active material of the electrode sheet 7, the size of the coating 72 may be adjusted, for example, in the case where the expansion rate of the electrode sheet 7 is great, the size of the coating 72 is increased, thereby providing a relatively large recessed area on the surface of the active material layer 73 and reducing the expansion force of the electrode assembly; and in the case where the expansion rate of the electrode sheet 7 is relatively less, the size of the coating 72 is decreased, thereby, in the case where the surface of the active material layer 73 has the relatively small recessed area, similarly playing a role of reducing the expansion force of the electrode assembly well.

The expansion rate Z of the electrode sheet 7=[(the thickness of the electrode sheet 7 after expansion-the initial thickness of the electrode sheet 7)/the initial thickness]*100%.

The initial thickness refers to the thickness of the electrode sheet 7 in a fresh battery cell, and the fresh battery cell may be understood as a battery cell with the number of cycles of the battery cell being less than or equal to 10.

The thickness after expansion refers to the thickness of the electrode sheet 7 of the battery cell after 500 cycles of 1C-rate cycling.

In the implementation of the present application, the expansion rate of the electrode sheet 7 may be detected by the following method: for example, 10 battery cells in a same batch are taken as measured samples, the electrode sheets 7 in 5 battery cells are taken out, the electrode sheets 7 are cleaned in deionized water and dried at 85°C for 4 h, the thicknesses of the electrode sheets 7 are measured, and the average thickness of the electrode sheets is calculated and recorded as the initial thickness; the remaining 5 batteries are subjected to cyclic charging and discharging (1C rate), after 500 cycles, the electrode sheets 7 in the battery cells are taken out, the electrode sheets 7 are cleaned in deionized water and dried at 85°C for 4 h, the thicknesses of the electrode sheets 7 are measured, the average thickness of the electrode sheets is calculated and recorded as the average thickness of the electrode sheet, thereby calculating the expansion rate of the electrode sheets 7.

In some implementations, Z|<20%; 0.10≤Y≤0.50; optionally, 0.10≤Y≤0.15. Exemplarily, Z may be 6%, 7%, 8%, 10%, 11%, 12%, 12%, 15%, 16%, 17%, 18%, 19%, 19.5%, or a range formed by any two of the above values. Y may be 0.10, 0.11, 0.12, 0.13, 0.14, 0.15, 0.16, 0.18, 0.20, 0.22, 0.25, 0.26, 0.28, 0.30, 0.33, 0.35, 0.38, 0.40, 0.42, 0.45, 0.46, 0.48, 0.50 or a range formed by any two of the above values.

In some embodiments, 20%≤Z<25%; 0.13≤Y≤0.50; and optionally 0.13≤Y≤0.20. Exemplarily, Z may be 20%, 21%, 22%, 23%, 24%, 24.5%, or a range formed by any two of the above values. Y may be 0.13, 0.14, 0.15, 0.16, 0.18, 0.20, 0.22, 0.25, 0.26, 0.28, 0.30, 0.33, 0.35, 0.38, 0.40, 0.42, 0.45, 0.46, 0.48, 0.50, or a range formed by any two of the above values.

In some embodiments, 25%≤Z<30%; 0.15≤Y≤0.50; and optionally 0.15≤Y≤0.30. Exemplarily, Z may be 25%, 26%, 27%, 28%, 29%, 29.5%, or a range formed by any two of the above values. Y may be 0.15, 0.16, 0.18, 0.20, 0.22, 0.25, 0.26, 0.28, 0.30, 0.33, 0.35, 0.38, 0.40, 0.42, 0.45, 0.46, 0.48, 0.50, or a range formed by any two of the above values.

In some implementations, 30%≤Z; 0.30≤Y≤0.50; optionally 0.33≤Y≤0.50. Exemplarily, Z may be 30%, 32%, 33%, 35%, 36%, 38%, 39%, 40%, 42%, 45%, or a range formed by any two of the above values. Y may be 0.30, 0.31, 0.32, 0.33, 0.35, 0.38, 0.40, 0.42, 0.45, 0.46, 0.48, 0.50, or a range formed by any two of the above values.

It should be noted herein that when the electrode sheet 7 is a positive electrode sheet, the expansion rate and the value range of Y satisfy the above ranges; and when the electrode sheet 7 is a negative electrode sheet, the expansion rate and the value range of Y satisfy the above ranges, but the selection of the values Y of the positive electrode sheet and the negative electrode sheet may not interfere with each other.

In some implementations, a ratio of a coating gram weight of the active material layer 73 to a coating gram weight of the coating 72 is 5.2 to 200, optionally 6.5 to 100.

When the ratio of the coating gram weight of the active material layer 73 to the coating gram weight of the coating 72 is within the above range, the decomposition of the decomposable material during the cyclic charging and discharging process of the battery cell can leave a sufficient expansion space for the active material layer 73, thereby improving the cycle performance of the battery cell.

Exemplarily, the ratio of the coating gram weight of the active material layer 73 to the coating gram weight of the coating 72 may be 5.2, 6, 6.5, 8, 10, 12, 13, 15, 16, 18, 20, 22, 25, 28, 30, 32, 35, 38, 40, 42, 45, 50, 55, 58, 60, 65, 70, 75, 80, 85, 90, 95, 100, 105, 110, 115, 120, 125, 130, 135, 140, 145, 150, or a range formed by any two of the above values.

In some implementations, a coating gram weight C1 of the active material layer 73 satisfies 65g/m²≤C1≤300g/m². When the coating gram weight of the active material layer 73 is within the above range, the energy density of the battery cell can be improved.

Exemplarily, the coating gram weight C1 of the active material layer 73 may be 65g/m², 68g/m², 70g/m², 72g/m², 75g/m², 78g/m², 80g/m², 85g/m², 90g/m², 95g/m², 100g/m², 105g/m², 110g/m², 115g/m², 120g/m², 125g/m², 130g/m², 135g/m², 140g/m², 150g/m², 155g/m², 160g/m², 165g/m², 170g/m², 180g/m², 190g/m², 200g/m², 210g/m², 220g/m², 230g/m², 240g/m², 250g/m², 260g/m², 270g/m², 280g/m², 290g/m², 300g/m², or a range formed by any two of the above values.

In some implementations, a coating gram weight C2 of the coating 72 satisfies 2g/m²≤C2≤20g/m², optionally, 5g/m²≤C2≤20g/m². When the coating gram weight of the coating 72 is within the above range, a reserved expansion space can be provided for the active material layer 73, thereby improving the cycle performance of the battery cell.

Exemplarily, the coating gram weight C2 of the coating 72 may be 2g/m², 3g/m², 4g/m², 5g/m², 6g/m², 7g/m², 8g/m², 9g/m², 10g/m², 11g/m², 12g/m², 13g/m², 14g/m², 15g/m², 16g/m², 17g/m², 18g/m², 19g/m², 20g/m², or a range formed by any two of the above values.

In the implementation of the present application, the coating gram weights of the active material layer 73 and the coating 72 are meaning well-known in the art, and may be measured using an instrument or a method known in the art. For example, the electrode sheet 7 coated on one side and cold-pressed (if the electrode sheet is coated on both sides, the active material layer 73 and the coating 72 on one side may be wiped off first) is punched into a small round piece with an area of S1, and the weight of the small round piece is weighed and recorded as M1. Then, the weighed active material layer 73 of the electrode sheet 7 is wiped off, the weight of the current collector 71 and the coating 72 is weighed and recorded as M0, and the coating gram weight of the active material layer 73=(the weight M1 of the electrode sheet 7-the weight M0 of the current collector 71 and the coating 72)/S1. The coating 72 is wiped off, the weight of the current collector 71 is weighed as M2, and the coating gram weight of the coating 72=(the weight M0 of the current collector 71 and the coating 72-the weight M2 of the current collector 71)/S1.

All the parameters mentioned in the implementations of the present application refer to the parameter ranges of the single-sided coating 72 or the active material layer 73. When the coating 72 or the active material layer 73 is provided on both surfaces of the current collector 71, the parameters of the coating 72 or the active material layer 73 on any one of the surfaces satisfy the present application, that is, it is considered to fall within the protection scope of the present application.

The coating 72 includes at least one coating area 721, there may be one or more coating areas 721, and when there a plurality of coating areas 721, there may be two, three, four coatings areas, or the like. The plurality of coating areas 721 may be spaced apart on the surface of the current collector 71 and located between the current collector 71 and the active material layer 73. The plurality of coating areas 721 can provide a plurality of recessed areas for the active material layer 73 by decomposing the decomposable material, thereby further reducing the expansion force of the electrode assembly and improving the liquid retention capacity of the electrode sheet 7.

A projection profile of the coating area 721 in the thickness direction may be a regular geometric figure or an irregular geometric figure, the regular geometric figure may be a triangle, a quadrangle, a pentagon, a hexagon, an octagon, a circle, an ellipse, or the like, and at least a part of the irregular geometric figure may be an arc or the like.

The current collector 71 includes two surfaces opposite to each other in its own thickness direction, and the coating 72 is provided on at least one surface of the current collector 71, for example, the coating 72 may be provided on one surface of the current collector 71, or the coating 72 may be provided on both surfaces of the current collector 71.

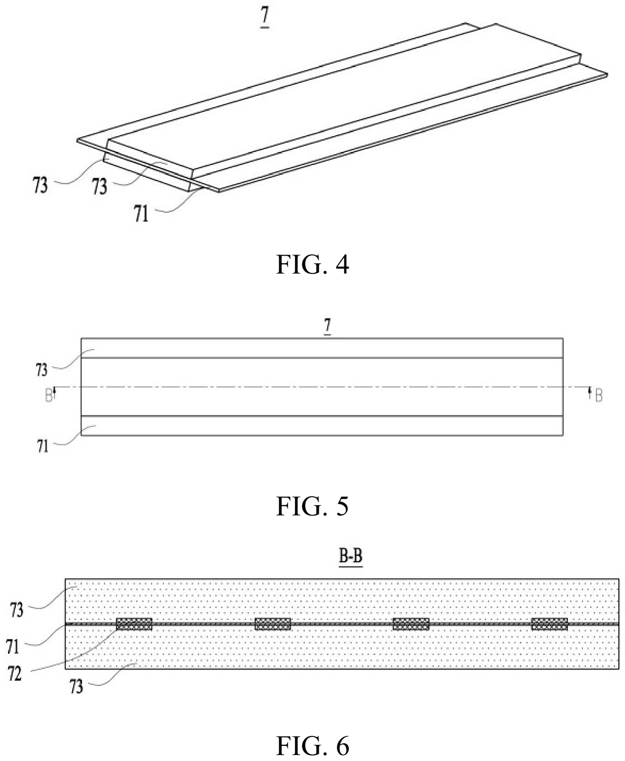

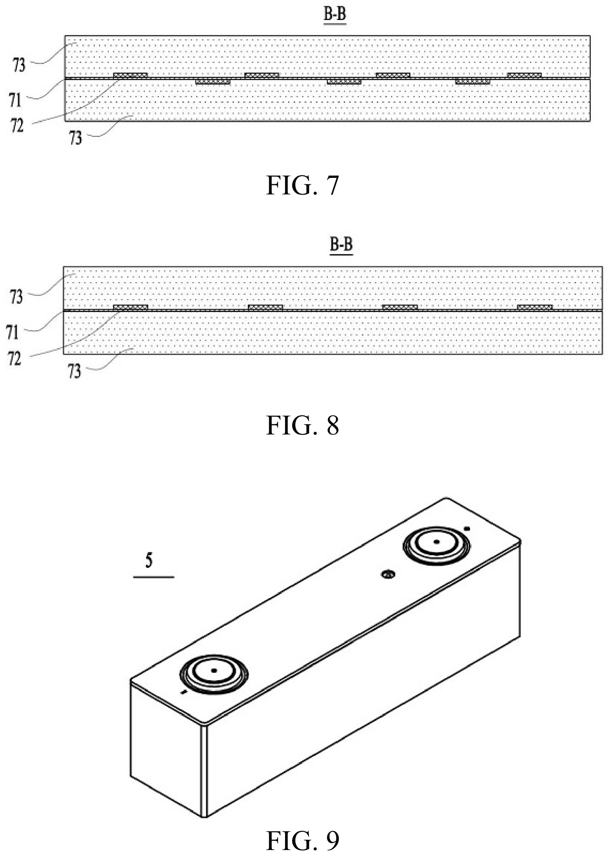

As shown in FIG. 4 to FIG. 7, when the coating 72 is provided on both surfaces of the current collector 71, the structure of the electrode sheet 7 may include an active material layer 73, a coating 72, a current collector 71, a coating 72, and an active material layer 73 that are sequentially provided in a thickness direction. The coatings 72 on the two surfaces may be completely symmetrical or asymmetrical, for example, the coatings 72 on the two surfaces are staggered, that is, the projections of the coatings 72 on the two surfaces in the thickness direction partially overlap or do not overlap. FIG. 6 shows a schematic diagram of the coatings 72 on the two surfaces of the electrode sheet 7 that are substantially symmetrically provided. FIG. 7 shows a schematic diagram of asymmetric arrangement of the coatings 72 on the two surfaces of the electrode sheet 7.

The coating amounts of the coatings 72 on both surfaces may be different or may be the same. The coating shapes of the coatings 72 on both surfaces may be different or may be the same.

When the coating 72 is provided on one surface of the current collector 71, the structure of the electrode sheet 7 may include the current collector 71, the coating 72, and the active material layer 73 that are sequentially provided in the thickness direction; or as shown in FIG. 8, the structure of the electrode sheet 7 may include the active material layer 73, the current collector 71, the coating 72, and the active material layer 73 that are sequentially provided in the thickness direction.

In some implementations, the active material layer 73 includes a positive active material; in this case, the electrode sheet 7 is a positive electrode sheet, the active material layer 73 is a positive active material layer, and the current collector 71 is a positive current collector.

In some implementations, the active material layer 73 includes a negative active material; in this case, the electrode sheet 7 is a negative electrode sheet, the active material layer 73 is a negative active material layer, and the current collector 71 is a negative current collector.

### [Positive electrode sheet]

In some implementations, the positive electrode sheet is the positive electrode sheet described above. The positive electrode sheet includes a positive electrode current collector and a positive electrode active material layer provided on at least one surface of the positive electrode current collector and including a positive electrode active material, and the positive electrode sheet further includes a coating, where the coating is provided on at least one surface of the positive electrode current collector, and the positive electrode active material layer covers the coating.

For example, the positive electrode current collector has two surfaces opposite in its thickness direction, and the positive electrode active material layer is provided on either one or both of the two opposite surfaces of the positive electrode current collector.

When the battery cell in the present application is a lithium-ion battery, the positive electrode active material may include, but is not limited to, at least one of lithium transition metal oxide, lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium ferric manganese phosphate, a composite of lithium ferric manganese phosphate and carbon, and respective modified compounds thereof.

In some implementations, to further improve the energy density of the battery cell, the positive electrode active material for the lithium-ion battery may include at least one of lithium transition metal oxide having a general formula of LiₐNi_{b}Co_{c}M_{d}OₑA_{f} and a modified compound thereof. 0.8≤A≤1.2, 0.5≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl.

As an example, the positive electrode active material for a lithium-ion battery may include at least one of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

When the battery cell in the present application is a sodium-ion battery, the positive electrode active material may include, but is not limited to, at least one of sodium-containing transition metal oxide, a polyanionic material (such as phosphate, fluorophosphate, pyrophosphate, and sulfate), and a Prussian blue material.

As an example, the positive electrode active material for a sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula of XₚM'_{q}(PO₄)ᵣOₓY₃₋ₓ. In the general formula of XₚM'_{q}(PO₄)ᵣOₓY₃₋ₓ, 0<p ≤4, 0<q≤ 2, 1≤r≤ 3, 0≤ x≤ 2, X is selected from at least one of H⁺, Li⁺, Na⁺, K⁺ and NH₄⁺, M' is a transition metal cation, optionally at least one of V, Ti, Mn, Fe, Co, Ni, Cu, and Zn, and Y is a halide anion, optionally at least one of F, Cl, and Br.

In the present application, the modified compound of each of the above positive electrode active materials may be a compound of the positive electrode active material subjected to doping modification and/or surface coating modification.

In some implementations, the positive electrode active material layer further optionally includes a positive electrode conductive agent. The type of the positive electrode conductive agent is not particularly limited in the present application. As an example, the positive electrode conductive agent includes at least one of superconducting carbon, conductive graphite, acetylene black, carbon black, Ketjen black, carbon dot, carbon nanotube, graphene, and carbon nanofiber. In some implementations, the mass percentage content of the positive electrode conductive agent is less than 5% based on the total mass of the positive electrode active material layer.

In some implementations, the positive electrode active material layer further optionally includes a positive electrode binder. The type of the positive electrode binder is not particularly limited in the present application. As an example, the positive electrode binder may include at least one of polyvinylidene fluoride (PVDF), polytetrafluoroethylene (PTFE), vinylidene fluoridetetrafluoroethylene-propylene terpolymer, vinylidene fluoride-hexafluoropropylene-tetrafluoroethylene terpolymer, tetrafluoroethylene-hexafluoropropylene copolymer, and fluorinecontaining acrylate resin. In some implementations, the mass percentage content of the positive electrode binder is less than 5% based on the total mass of the positive electrode active material layer.

In some implementations, the positive electrode current collector may be a metal foil or a composite current collector. As an example of the metal foil, aluminum foil may be used. The composite current collector may include a polymer material base layer and a metal material layer formed on at least one surface of the polymer material base layer. As an example, the metal material may include at least one of aluminum, an aluminum alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The positive electrode active material layer is generally formed by applying a positive electrode slurry on the positive electrode current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto.

### [Negative electrode sheet]

In some implementations, the negative electrode sheet is the electrode sheet described above. The negative electrode sheet includes a negative electrode current collector and a negative electrode active material layer provided on at least one surface of the negative electrode current collector and including a negative electrode active material, and the negative electrode sheet further includes a coating, where the coating is provided on at least one surface of the negative electrode current collector, and the negative electrode active material layer covers the coating.

The negative electrode active material may be a negative electrode active material for a battery well-known in the art. As an example, the negative electrode active material may include, but is not limited to, at least one of artificial graphite, natural graphite, hard carbon, soft carbon, a silicon-based material, a tin-based material, and lithium titanate. The silicon-based material may include at least one of elemental silicon, silicon oxide, a silicon-carbon composite, a siliconnitrogen composite, and a silicon alloy material. The tin-based material may include at least one of elemental tin, tin oxide, and a tin alloy material.

In some implementations, the negative electrode active material layer further optionally includes a negative electrode conductive agent. The type of the negative electrode conductive agent is not particularly limited in the present application. As an example, the negative electrode conductive agent includes at least one of superconducting carbon, conductive graphite, acetylene black, carbon black, Ketjen black, carbon dot, carbon nanotube, graphene, and carbon nanofiber. In some implementations, the mass percentage content of the negative electrode conductive agent is less than 5% based on the total mass of the negative electrode active material layer.

In some implementations, the negative electrode active material layer further optionally includes a negative electrode binder. The type of the negative electrode binder is not particularly limited in the present application. As an example, the negative electrode binder may include at least one of styrene-butadiene rubber (SBR), aqueous unsaturated resin SR-1B, aqueous acrylic resin (e.g., polyacrylic acid (PAA), polymethacrylic acid (PMAA), and sodium polyacrylate (PAAS)), polyacrylamide (PAM), polyvinyl alcohol (PVA), sodium alginate (SA), and carboxymethyl chitosan (CMCS). In some implementations, the mass percentage content of the negative electrode binder is less than 5% based on the total mass of the negative electrode active material layer.

In some implementations, the negative electrode active material layer further optionally includes other auxiliary agents. As an example, other auxiliary agents may include a thickening agent, such as carboxymethylcellulose (CMC) sodium and a PTC thermistor material. In some implementations, based on the total weight of the negative electrode active material layer, the mass percentage content of the other auxiliary agents is ≤2wt%.

In some implementations, the negative pole current collector may use a metal foil or a composite current collector. As an example of the metal foil, a copper foil may be used. The composite current collector may include a polymer material base layer and a metal material layer formed on at least one surface of the polymer material base layer. As an example, the metal material may include at least one of copper, a copper alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The negative electrode active material layer is generally formed by applying a negative electrode slurry onto the negative electrode current collector, followed by drying and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or deionized water, but is not limited thereto.

The negative electrode sheet does not exclude other additional functional layers in addition to the negative electrode active material layer. For example, in some embodiments, the negative electrode sheet in the implementation of the present application further includes a conductive undercoat (for example, composed of a conductive agent and a binder) sandwiched between the negative electrode current collector and the negative electrode active material layer and provided on the surface of the negative electrode current collector. In some other embodiments, the negative electrode sheet in the present application further includes a protective layer covering the surface of the negative electrode active material layer.

### Battery cell

In a second aspect, the implementation of the present application further provides a battery cell, which is also known as a rechargeable battery or a storage battery, referring to a battery that may continue to be used by activating an active material by means of charging after discharging the battery. Generally, the battery cell includes an electrode assembly and an electrolyte solution, where the electrode assembly includes a positive electrode sheet, a negative electrode sheet, and a separator, and the separator is provided between the positive electrode sheet and the negative electrode sheet, mainly functions to prevent a positive electrode and a negative electrode from being short-circuited, and may allow active ions to pass through.

The type of the battery cell is not particularly limited in the present application, for example, the battery cell may be a lithium-ion battery, a sodium-ion battery, or the like, and in particular, the battery cell may be a lithium-ion battery.

In some implementations, the positive electrode sheet is the positive electrode sheet in any implementation in the first aspect of the present application. The negative electrode sheet may be a conventional negative electrode sheet, and the conventional negative electrode sheet may not include a coating.

In some other implementations, the negative electrode sheet is the negative electrode sheet in any implementation in the first aspect of the present application. The positive electrode sheet may be a conventional positive electrode sheet, and the conventional positive electrode sheet may not include a coating.

In still some other implementations, the positive electrode sheet may be the positive electrode sheet in any embodiment in the first aspect of the present application, and the negative electrode sheet may be the negative electrode sheet in any embodiment in the first aspect of the present application.

### [Electrolyte solution]

### The battery cell further includes an electrolyte solution.

During charging and discharging of the battery cell, active ions are intercalated and deintercalated back and forth between the positive electrode sheet and the negative electrode sheet. The electrolyte solution functions to conduct the active ions between the positive electrode sheet and the negative electrode sheet. The type of the electrolyte solution is not particularly limited in the present application and may be selected according to actual needs.

The electrolyte solution includes an electrolyte salt and a solvent. The type of the electrolyte salt and the type of the solvent are not limited specifically and may be selected according to actual needs.

When the battery cell in the present application is a lithium-ion battery, as an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

When the battery cell in the present application is a sodium-ion battery, as an example, the electrolyte salt may include at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some implementations, the electrolyte solution further optionally includes an additive. For example, the additive may include a negative electrode film-forming additive or a positive electrode film-forming additive, and may further include an additive capable of improving some performance of a battery, for example, an additive for improving overcharge performance of a battery, an additive for improving high-temperature performance of a battery, an additive for improving low-temperature power performance of a battery, etc.

### [Separator]

### The battery cell may further include a separator.

In some implementations, the battery cell further includes a separator. The type of the separator is not particularly limited in the present application, and any well-known porous separator with good chemical stability and mechanical stability may be used.

In some implementations, the material of the separator may include at least one of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the positive electrode sheet, the separator, and the negative electrode sheet may be fabricated into an electrode assembly by a winding process and/or a lamination process.

In some implementations, the battery cell may include an outer package. The outer package may be used to encapsulate the electrode assembly and the electrolyte solution described above.

In some implementations, the outer package of the battery cell may be a hard casing, for example, a hard plastic casing, an aluminum casing, a steel casing, or the like. The outer package of the battery cell may also be a pouch, such as a bag-type pouch. The material of the pouch may be a plastic, such as at least one of polypropylene (PP), polybutylene terephthalate (PBT), and polybutylene succinate (PBS).

The shape of the battery cell is not particularly limited in the present application, and may be a cylindrical shape, a square shape, or any other shape. FIG. 9 shows a battery cell 5 with a square structure as an example.

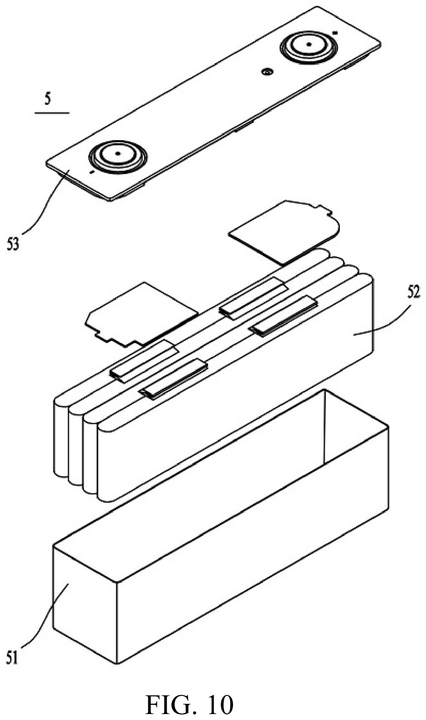

In some implementations, as shown in FIG. 10, an outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The positive electrode sheet, the negative electrode sheet, and the separator may be formed into the electrode assembly 52 by a winding process and/or a lamination process. The electrode assembly 52 is packaged within the accommodating chamber. The electrolyte solution is impregnated into the electrode assembly 52. The battery cell 5 may have one or more electrode assemblies 52, and the number of the electrode assemblies may be adjusted as needed.

A preparation method for the battery cell in the present application is well known. In some implementations, the positive electrode sheet, the separator, the negative electrode sheet, and the electrolyte solution may be assembled to form a battery cell. As an example, the positive electrode sheet, the separator, and the negative electrode sheet may form an electrode assembly through a winding process and/or a lamination process, and the electrode assembly is placed in an outer package, into which an electrolyte solution is injected after drying, followed by processes such as vacuum packaging, standing, and formation, so as to obtain the battery cell.

In some implementations of the present application, the battery cells according to the present application may be assembled into a battery module. The battery module may include a plurality of battery cells, and the specific number of the battery cells may be adjusted according to application and capacity of the battery module.

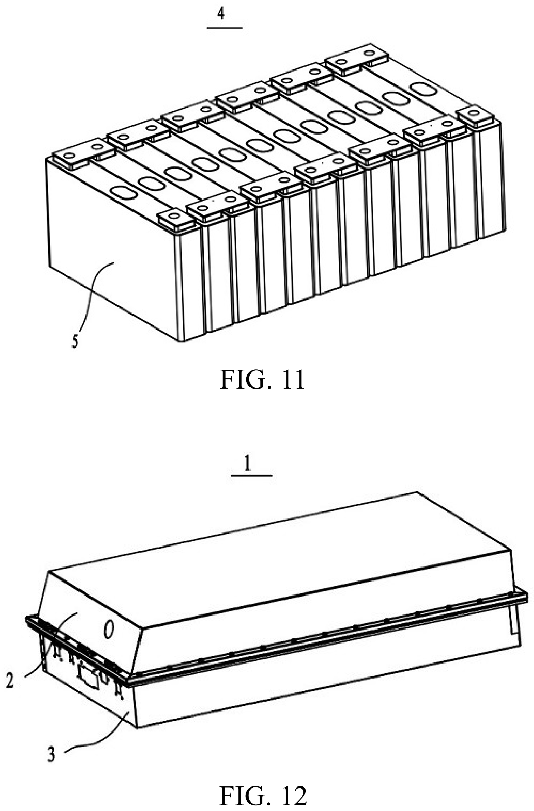

FIG. 11 is a schematic diagram of a battery module 4 as an example. As shown in FIG. 11, in the battery module 4, a plurality of battery cells 5 may be arranged sequentially in a length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the above battery module 4 may be further assembled into a battery pack. The number of battery modules 4 contained in the battery pack may be adjusted according to application and capacity of the battery pack.

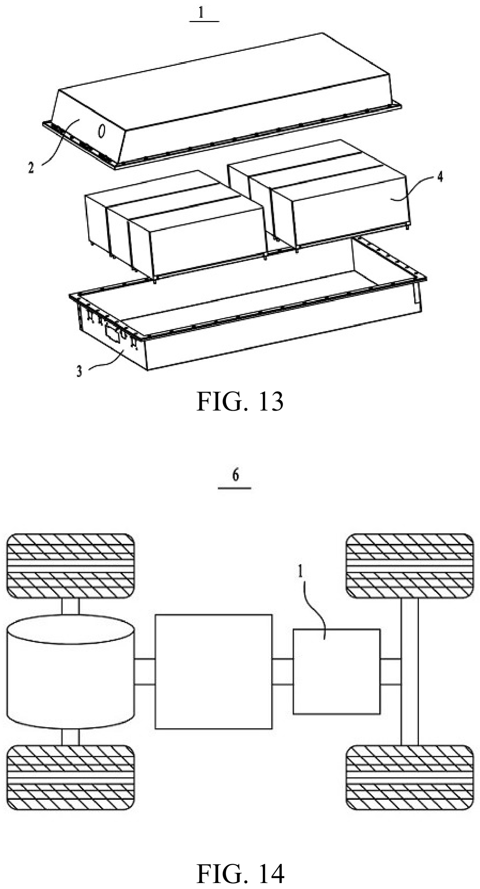

FIG. 12 and FIG. 13 are schematic diagrams of a battery pack 1 as an example. As shown in FIG. 12 and FIG. 13, the battery pack 1 may include a battery case and a plurality of battery modules 4 provided in the battery case. The battery case includes an upper box body 2 and a lower box body 3. The upper box body 2 is configured to cover the lower box body 3 to form a closed space for accommodating the battery modules 4. The plurality of battery modules 4 may be arranged in any manner in the battery box.

In the implementations of the present application, a battery cell, a battery module, and a battery pack may all be examples of a battery.

### Electric device

A third aspect of an implementation of the present application further provides an electric device. The electric device includes at least one of the battery, the battery module, or the battery pack provided in the present application. The battery, the battery module, or the battery pack may be used as a power supply of the electric device and may also be used as an energy storage unit of the electric apparatus. The electric device may include, but is not limited to, mobile equipment (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As the electric device, the battery cell, the battery module or the battery pack may be selected according to the use requirements.

FIG. 14 is a schematic diagram of an electric device 6 as an example. The electric device 6 is a battery electric vehicle, a hybrid electric vehicle, a plug-in hybrid electric vehicle, or the like. To satisfy the demands for high power and high energy density of the electric device 6, a battery pack or a battery module may be used.

As another example, the electric device may be a cell phone, a tablet computer, a notebook computer, or the like. The electric device is generally required to be light and thin, and may use a battery cell as a power supply.

### Examples

The following examples describe the disclosure of the present application more specifically. These examples are used only for illustration, since various modifications and changes made within the scope of the disclosure of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Example 1

### 1. Preparation of a positive electrode sheet

A 12 µm thick aluminum foil was used as a positive electrode current collector.

A lithium supplementing material lithium nitride, a conductive agent carbon black, and a binder polyvinylidene fluoride (PVDF) were added into a solvent N-methylpyrrolidone (NMP) at a mass ratio of 90: 5: 5 to be stirred and mixed thoroughly to form a uniform functional slurry, and the functional slurry was uniformly coated on a surface of a positive electrode current collector aluminum foil, and dried and cold-pressed to obtain a coating.

A positive active material LiNi_{0.8}Co_{0.1}Mn_{0.1}O₂ (NCM811), a conductive agent carbon black, and a binder polyvinylidene fluoride (PVDF) were fully stirred and mixed in an appropriate amount of a solvent N-methylpyrrolidone NMP at a weight ratio of 97.5:1.4:1.1 to form a uniform positive electrode slurry, and the positive electrode slurry was uniformly coated on a surface of a positive current collector aluminum foil, and dried and cold-pressed to obtain a positive electrode sheet containing a positive active material layer, where the positive active material layer covered the coating, and the positive electrode sheet included the positive active material layer, the coating, the positive current collector, the coating, and the positive active material layer sequentially provided in a thickness direction.

### 2. Preparation of a negative electrode sheet

An 8 µm thick copper foil was used as a negative electrode current collector.

A lithium supplementing material lithium nitride, a conductive agent carbon black (Super P), and a binder polyvinylidene fluoride (PVDF) were added into a solvent N-methylpyrrolidone (NMP) at a mass ratio of 90: 5: 5 to be stirred and mixed thoroughly to form a uniform functional slurry, and the functional slurry was uniformly coated on a surface of a negative electrode current collector copper foil, and dried and cold-pressed to obtain a coating.

A negative electrode active material graphite (95% of artificial graphite and 5% of natural graphite), a binder styrene-butadiene rubber (SBR), a thickener sodium carboxymethyl cellulose (CMC-Na), and a conductive agent carbon black (Super P) were fully stirred and mixed in an appropriate amount of a solvent deionized water at a weight ratio of 96.2: 1.8: 1.2: 0.8 to form a uniform negative electrode slurry, and the negative electrode slurry was uniformly coated on a surface of the negative electrode current collector copper foil, and dried and cold-pressed to obtain a negative electrode active material layer, where the negative electrode active material layer covered the coating, and the negative electrode sheet included the negative electrode active material layer, the coating, the negative electrode current collector, the coating, and the negative electrode active material layer sequentially provided in a thickness direction.

### 3. Separator

A porous polyethylene (PE) film was used as a separator.

### 4. Preparation of an electrolyte solution

In an environment with a water content of less than 10 ppm, non-aqueous organic solvents ethylene carbonate EC and diethyl carbonate DMC were mixed at a volume ratio of 1:1 to obtain an electrolyte solution solvent, and then a lithium salt lithium hexafluorophosphate was mixed with the mixed solvent to prepare an electrolyte solution having a lithium salt concentration of 1 mol/L.

### (5) Preparation of a battery cell

The positive electrode sheet, the separator, and the negative electrode sheet described above were stacked in order such that the separator was located between the positive electrode sheet and the negative electrode sheet to provide a separation function, and then the three items were wound to obtain an electrode assembly; and the electrode assembly was placed into an outer package, dried, then injected with an electrolyte solution, and subject to procedures such as vacuum sealing, resting, formation, and shaping to obtain a lithium-ion battery.

### Comparative Example 1

A lithium-ion battery was prepared by a method similar to the method in Example 1. Different from Example 1, a method for preparing the positive electrode sheet in Comparative Example 1 is as follows:

A 12 µm thick aluminum foil was used as a positive electrode current collector.

A positive electrode active material LiNi_{0.8}Co_{0.1}Mn_{0.1}O₂ (NCM811), a conductive agent carbon black, and a binder polyvinylidene fluoride (PVDF) were fully stirred and mixed in an appropriate amount of a solvent N-methylpyrrolidone NMP at a weight ratio of 97.5: 1.4: 1.1 to form a uniform positive electrode slurry, and the positive electrode slurry was uniformly coated on a surface of a positive electrode current collector aluminum foil, and dried and cold-pressed to obtain a positive electrode sheet containing a positive electrode sheet, where the positive electrode sheet included the positive electrode active material layer, the positive electrode current collector, and the positive electrode active material layer sequentially provided in a thickness direction, and a width of the positive electrode active material layer was 180 mm, a thickness thereof was 130 µm, and a coating gram weight thereof was 200g/m².

A method for preparing a negative electrode sheet is as follows:
An 8 µm thick copper foil was used as a negative electrode current collector.
A negative electrode active material (95% of artificial graphite and 5% of natural graphite), a binder styrene-butadiene rubber (SBR), a thickener sodium carboxymethyl cellulose (CMC-Na), and a conductive agent carbon black (Super P) were fully stirred and mixed in an appropriate amount of a solvent deionized water at a weight ratio of 96.2: 1.8: 1.2: 0.8 to form a uniform negative electrode slurry, and the negative electrode slurry was uniformly coated on a surface of the negative electrode current collector copper foil, and dried and cold-pressed to obtain a negative electrode sheet, where the positive electrode sheet included the negative electrode active material layer, the negative electrode current collector, and the negative electrode active material layer sequentially provided in a thickness direction, and a width of the negative electrode active material layer was 190 mm, a thickness thereof was 150 µm, and a coating gram weight thereof was 130/m².

### Example 2

A lithium-ion battery was prepared by a method similar to the method in Example 1. Different from Example 1, a method for preparing the negative electrode sheet without the coating in Comparative Example 2 is as follows:
An 8 µm thick copper foil was used as a negative electrode current collector.

A negative electrode active material graphite (95% of artificial graphite and 5% of natural graphite), a binder styrene-butadiene rubber (SBR), a thickener sodium carboxymethyl cellulose (CMC-Na), and a conductive agent carbon black (Super P) were fully stirred and mixed in an appropriate amount of a solvent deionized water at a weight ratio of 96.2: 1.8: 1.2: 0.8 to form a uniform negative electrode slurry, and the negative electrode slurry was uniformly coated on a surface of the negative electrode current collector copper foil, and dried and cold-pressed to obtain a negative electrode sheet, where the negative electrode sheet included the negative electrode active material layer, the negative electrode current collector, and the negative electrode active material layer sequentially provided in a thickness direction.

### Example 3

A lithium-ion battery was prepared by a method similar to the method in Example 1. Different from Example 1, a method for preparing the positive electrode sheet without the coating in Comparative Example 3 is as follows:
A 12 µm thick aluminum foil was used as a positive electrode current collector.

A positive active material LiNi_{0.8}Co_{0.1}Mn_{0.1}O₂ (NCM811), a conductive agent carbon black, and a binder polyvinylidene fluoride (PVDF) were fully stirred and mixed in an appropriate amount of a solvent N-methylpyrrolidone NMP at a weight ratio of 97.5: 1.4: 1.1 to form a uniform positive electrode slurry, and the positive electrode slurry was uniformly coated on a surface of a positive current collector aluminum foil, and dried and cold-pressed to obtain a positive electrode sheet containing a positive active material layer, where the positive electrode sheet included the positive active material layer, the positive current collector, and the positive active material layer sequentially provided in a thickness direction.

### Example 4 to Example 6

A lithium-ion battery was prepared by a method similar to the method in Example 1, different from Example 1, the negative active material and the coating size are adjusted in Example 4 to Example 6, which are specifically as follows:
The negative active material in Example 4 includes 95% of artificial graphite and 5% of silicon.

The negative active material in Example 5 includes 98.5% of artificial graphite and 1.5% of silicon.

The negative active material in Example 6 includes 90% of artificial graphite and 10% of natural graphite.

### Example 7

A lithium-ion battery was prepared by a method similar to the method in Example 1, different from Example 1, the positive active material is adjusted in Example 7, and the positive active material in Example 7 is lithium iron phosphate LiFePO₄.

### Example 8 to Example 13

A lithium-ion battery was prepared by a method similar to the method in Example 1, different from Example 1, the type of the decomposable material in the coating in Example 8 to Example 13 is adjusted.

### Example 14 to Example 19

A lithium-ion battery was prepared by a method similar to the method in Example 1, different from Example 1, the thickness of the coating and the like are adjusted for at least one of the positive electrode sheet and the negative electrode sheet in Example 14 to Example 19.

### Test Section

### 1. Test of an initial capacity of an electrode sheet

The positive electrode sheets prepared in the above Examples and Comparative Examples were taken and formed counter electrodes with a metal lithium plate, a polyethylene (PE) film was used as a separator, several drops of the same electrolyte solution as the battery cell in Example 1 were added dropwise, and assembled into a CR2430 button battery in an argonprotected glove box.

After the obtained button battery was allowed to stand for 12 h, the button battery was charged/discharged three times at a constant current of 0.1C/0.1C at 25°C, and the discharge capacity was recorded; and the discharge capacity at the third time was used as an initial capacity value.

Accordingly, the initial gram volume of the negative electrode active material may also be calculated according to the above method.

### 2. Method for testing a remaining cycle capacity and a retention rate

The lithium-ion batteries prepared in the above Examples and Comparative Examples were tested with three aluminum plate clamps and sensors, the initial clamp force was 3000N, and a 1C/1C cycle retention rate test was performed at a temperature of 25°C using an incubator, expansion force data was recorded in real time, and the capacity retention rate was recorded until 3000 cycles were performed.

### 3. Interfacial state of the electrode sheet

The lithium-ion batteries prepared in the above Examples and Comparative Examples were subjected to three charge and discharge activation tests at 0.5C/0.5C, and left to stand for 2 h, and then subjected to three charge and discharge cycles at 2C/0.5C, and disassembled after being fully charged. There are different color regions at the interface, for example, there is an off-white color, the off-white region is regarded as a lithium plating region, and if no obvious off-white color is observed, it is regarded as no lithium plating.

### Test results

Test results are shown in Tables 1 and 2.

**Table 1**

| Item | Type of electrode sheet | Coating | | | | Electrode sheet | | | |
|---|---|---|---|---|---|---|---|---|---|
| | | Decomposable material | Coating gram weight (g/m²) | Width of coating area (mm) | Thickness (µm) | Expansion rate of electrode sheet (%) | Ratio of thickness of coating to thickness of active material layer | Ratio of width of coating to width of active material layer | Ratio of coating gram weight of active material layer to coating gram weight of coating |
| Comparative Example 1 | Positive electrode sheet | None | / | / | / | 10.0 | / | / | / |
| | Negative electrode sheet | None | / | / | / | 23.0 | / | / | / |
| Example 1 | Positive electrode sheet | Lithium nitride | 10 | 20 | 10 | 8.0 | 0.077 | 0.15 | 20 |
| | Negative electrode sheet | Lithium nitride | 10 | 20 | 10 | 21.0 | 0.067 | 0.13 | 13 |
| Example 2 | Positive electrode sheet | Lithium nitride | 10 | 20 | 10 | 8.0 | 0.077 | 0.15 | 20 |
| | Negative electrode sheet | None | / | / | / | 23.0 | / | / | / |
| Example 3 | Positive electrode sheet | None | / | / | / | 23.0 | / | / | / |
| | Negative electrode sheet | Lithium nitride | 10 | 20 | 10 | 22.0 | 0.067 | 0.13 | 13 |
| Example 4 | Positive electrode sheet | Lithium nitride | 10 | 20 | 10 | 8.0 | 0.077 | 0.15 | 20 |
| | Negative electrode sheet | Lithium nitride | 25 | 50 | 10 | 38.0 | 0.067 | 0.33 | 5.2 |
| Example 5 | Positive electrode sheet | Lithium nitride | 10 | 20 | 10 | 8.0 | 0.077 | 0.15 | 20 |
| | Negative electrode sheet | Lithium nitride | 17.5 | 35 | 10 | 26.0 | 0.067 | 0.23 | 20 |
| Example 6 | Positive electrode sheet | Lithium nitride | 8 | 16 | 10 | 8.0 | 0.077 | 0.12 | 25 |
| | Negative electrode sheet | Lithium nitride | 10 | 20 | 10 | 18.0 | 0.067 | 0.11 | 13 |
| Example 7 | Positive electrode sheet | Lithium nitride | 10 | 20 | 10 | 8.0 | 0.077 | 0.15 | 20 |
| | Negative electrode sheet | Lithium nitride | 10 | 20 | 10 | 20.0 | 0.067 | 0.13 | 13 |
| Example 8 | Positive electrode sheet | Lithium nitride | 10 | 20 | 10 | 8.0 | 0.077 | 0.15 | 20 |
| | Negative electrode sheet | Lithium nitride | 10 | 20 | 10 | 22.0 | 0.067 | 0.13 | 13 |
| Example 9 | Positive electrode sheet | Lithium nitride | 10 | 20 | 10 | 8.0 | 0.077 | 0.15 | 20 |
| | Negative electrode sheet | Lithium nitride | 10 | 20 | 10 | 22.0 | 0.067 | 0.13 | 13 |
| Example 10 | Positive electrode sheet | Lithium nitride | 10 | 20 | 10 | 8.0 | 0.077 | 0.15 | 20 |
| | Negative electrode sheet | Lithium peroxide | 10 | 20 | 10 | 22.0 | 0.067 | 0.13 | 13 |
| Example 11 | Positive electrode sheet | Lithium nitride | 10 | 20 | 10 | 8.0 | 0.077 | 0.15 | 20 |
| | Negative electrode sheet | Lithium-rich lithium ferrate | 10 | 20 | 10 | 22.0 | 0.067 | 0.13 | 13 |
| Example 12 | Positive electrode sheet | Zinc oxide | 10 | 20 | 10 | 7.5 | 0.077 | 0.15 | 20 |
| | Negative electrode sheet | Lithium-rich lithium ferrate | 10 | 20 | 10 | 22.0 | 0.067 | 0.13 | 13 |
| Example 13 | Positive electrode sheet | Sodium oxalate | 10 | 20 | 10 | 7.7 | 0.077 | 0.15 | 20 |
| | Negative electrode sheet | Lithium-rich lithium ferrate | 10 | 20 | 10 | 22.0 | 0.067 | 0.13 | 13 |
| Example 14 | Positive electrode sheet | Lithium nitride | 1 | 20 | 1 | 10.0 | 0.008 | 0.15 | 200 |
| | Negative electrode sheet | Lithium nitride | 10 | 20 | 10 | 22.0 | 0.067 | 0.13 | 13 |
| Example 15 | Positive electrode sheet | Lithium nitride | 2 | 20 | 2 | 9.0 | 0.015 | 0.15 | 100 |
| | Negative electrode sheet | Lithium nitride | 10 | 20 | 10 | 21.0 | 0.067 | 0.13 | 13 |
| Example 16 | Positive electrode sheet | Lithium nitride | 5 | 20 | 5 | 9.0 | 0.038 | 0.15 | 40 |
| | Negative electrode sheet | Lithium nitride | 10 | 20 | 10 | 22.0 | 0.067 | 0.13 | 13 |
| Example 17 | Positive electrode sheet | Lithium nitride | 20 | 20 | 20 | 8.0 | 0.154 | 0.15 | 10 |
| | Negative electrode sheet | Lithium nitride | 10 | 20 | 10 | 21.0 | 0.067 | 0.13 | 13 |
| Example 18 | Positive electrode sheet | Lithium nitride | 10 | 20 | 10 | 8.0 | 0.077 | 0.15 | 20 |
| | Negative electrode sheet | Lithium nitride | 2 | 20 | 2 | 23.0 | 0.013 | 0.13 | 65 |
| Example 19 | Positive electrode sheet | Lithium nitride | 10 | 20 | 10 | 8.0 | 0.077 | 0.15 | 20 |
| | Negative electrode sheet | Lithium nitride | 20 | 20 | 20 | 22.0 | 0.133 | 0.13 | 6.5 |

**Table 2**

| | Performance of lithium-ion battery | | |
|---|---|---|---|
| Item | Initial capacity (Ah) | Cycle retention rate | Interfacial state (whether lithium plating is performed) |
| Comparative Example 1 | 100 | 89.10% | Yes |
| Example 1 | 103 | 95.20% | No |
| Example 2 | 101 | 93.00% | No |
| Example 3 | 101 | 92.30% | No |
| Example 4 | 102 | 91.20% | No |
| Example 5 | 101 | 92.50% | No |
| Example 6 | 101 | 93.80% | No |
| Example 7 | 101 | 95.20% | No |
| Example 8 | 101 | 94.80% | No |
| Example 9 | 102 | 95.00% | No |
| Example 10 | 101 | 94.90% | No |
| Example 11 | 101 | 95.30% | No |
| Example 12 | 98 | 93.50% | No |
| Example 13 | 97 | 93.00% | No |
| Example 14 | 100 | 92.50% | No |
| Example 15 | 100 | 93.10% | No |
| Example 16 | 101 | 93.50% | No |
| Example 17 | 102 | 94.70% | No |
| Example 18 | 100 | 92.80% | No |
| Example 19 | 101 | 94.70% | No |

It may be seen from Table 1 and Table 2 that during the cycle charging and discharging process of the lithium-ion battery in Comparative Example 1, the volume expansion of the electrode sheet is large, which may cause the electrolyte solution to be extruded, thereby making the cycle performance poor and easily precipitating lithium dendrites.

Compared with Comparative Example 1, in the embodiments of the present application, both the positive electrode sheet and the negative electrode sheet are provided with the coating, the decomposable material in the coating can be decomposed during the cycle charging and discharging process of the lithium-ion battery, and the active material layer corresponding to the decomposable material will be recessed, thereby reducing the expansion rate of the electrode sheet and improving the cycle performance of the lithium-ion battery, and reducing the risk of lithium dendrite precipitation and improving the reliability of the lithium-ion battery in use. Moreover, in the embodiments of the present application, the coating is provided to basically not reduce the initial capacity of the lithium-ion battery, and the coating may also have a function of improving the initial capacity in the case where the coating contains the lithium supplementing material.

It is found through experiments that only providing the coating in the positive electrode sheet or the negative electrode sheet may also improve the cycle performance and use reliability of the lithium-ion battery to a certain extent. The coating is suitable for negative active material systems (corresponding to different expansion rates) of different materials and positive active material systems (corresponding to different expansion rates) of different materials, and may be adapted to different material systems by adjusting the size specification (such as thickness and/or width) of the coating. It is found through the tests in the Examples that when the ratio of the coating gram weight of the active material layer to the coating gram weight of the coating is 5.2 to 200, optionally 6.5 to 100, the effect of improving the cycle performance of the lithium-ion battery is better, and when the coating gram weight C2 of the coating satisfies 2g/m²≤C2≤20g/m², optionally 5g/m²≤C2≤20g/m², the effect of improving the cycle performance of the lithium-ion battery is better.

Although the implementations of the present application have been illustrated and described, it should be understood by those skilled in the art that the above implementations are not to be construed as limiting the present application and that changes, replacements, and modifications can be made to the embodiments without departing from the spirit, principles, and scope of the present application.

## Claims

1. An electrode sheet of a battery cell, comprising:
a current collector;
a coating, provided on at least one surface of the current collector, the coating comprising at least one coating area, the coating area comprising a decomposable material, the decomposable material being configured to decompose under at least one condition of charging and discharging of the battery cell, the decomposable material comprising at least one of a lithium supplementing material and a pore forming material, the lithium supplementing material comprising a lithium ion-containing compound; and
an active material layer, provided on at least one surface of the current collector and covering the coating.

2. The electrode sheet according to claim 1, wherein
the lithium supplementing material comprises one or more of lithium nitride, lithium oxide, lithium peroxide, lithium squarate, and lithium-rich lithium ferrate Li₅FeO₄.

3. The electrode sheet according to claim 1 or 2, wherein
the pore forming material comprises one or more of a carbonate, an oxalate and a metal oxide.

4. The electrode sheet according to claim 3, wherein
the carbonate comprises one or more of ammonium carbonate, ammonium bicarbonate, and sodium bicarbonate; and/or
the oxalate comprises one or more of ammonium oxalate, sodium oxalate, and ammonium hydrogen oxalate; and/or
the metal oxide comprises one or more of zinc oxide, magnesium oxide, and aluminum oxide.

5. The electrode sheet according to any one of claims 1 to 4, wherein a ratio of a coating gram weight of the active material layer to a coating gram weight of the coating is 5.2 to 200.

6. The electrode sheet according to claim 5, wherein the ratio of the coating gram weight of the active material layer to the coating gram weight of the coating is 6.5 to 100.

7. The electrode sheet according to any one of claims 1 to 6, wherein
a coating gram weight C1 of the active material layer satisfies 65g/m²≤C1≤300g/m², and/or
a coating gram weight C2 of the coating satisfies 2g/m²≤C2≤20g/m².

8. The electrode sheet according to any one of claims 1 to 7, wherein a ratio of a thickness of the coating to a thickness of the active material layer is 0.008 to 0.200.

9. The electrode sheet according to claim 8, wherein the ratio of the thickness of the coating to the thickness of the active material layer is 0.015 to 0.154.

10. The electrode sheet according to claim 8 or 9, wherein
the thickness of the coating is 1 µm to 20 µm; or
the thickness of the active material layer is 80 µm to 300 µm.

11. The electrode sheet according to any one of claims 1 to 10, wherein
a ratio of a width of the coating area to a width of the current collector is Y, where 0.05≤Y≤0.50.

12. The electrode sheet according to any one of claims 1 to 11, wherein
an expansion rate of the electrode sheet is Z, and the ratio of the width of the coating area to the width of the current collector is Y, and
the electrode sheet satisfies at least one of the following conditions:
(1) Z<20%; 0.10≤Y≤0.50;
(2) 20%≤Z<25%; 0.13≤Y≤0.50;
(3) 25%≤Z<30%; 0.15≤Y≤0.50; and
(4) 30%≤Z; 0.30≤Y≤0.50.

13. The electrode sheet according to claim 12, wherein
the electrode sheet satisfies at least one of the following conditions:
(1) Z<20%; 0.10≤Y≤0.15;
(2) 20%≤Z<25%; 0.13≤Y≤0.20;
(3) 25%≤Z<30%; 0.15≤Y≤0.30; and
(4) 30%<Z; 0.33≤Y≤0.50.

14. The electrode sheet according to any one of claims 1 to 13, wherein
the coating comprises a plurality of coating areas, and the plurality of coating areas are spaced apart on the surface of the current collector and located between the current collector and the active material layer.

15. The electrode sheet according to any one of claims 1 to 14, wherein
the coating is provided on both surfaces of the current collector opposite to each other.

16. A battery cell, comprising the electrode sheet according to any one of claims 1 to 15.

17. The battery cell according to claim 16, wherein the electrode sheet comprises a positive electrode sheet.

18. The battery cell according to claim 16, wherein the electrode sheet comprises a negative electrode sheet.

19. A battery, comprising the battery cell according to any one of claims 16 to 18.

20. An electric device, comprising the battery according to claim 19.
